# EUROPEAN PATENT SPECIFICATION

(11) **EP 4 278 628 B1**
(45) Date of publication and mention of the grant of the patent: **29.04.2026**
(21) Application number: 22739916.9
(22) Date of filing: 10.01.2022
(51) Int. Cl.: H04L 67/51, H04L 41/0806, H04L 41/082, H04L 41/5051, H04W 88/18, H04W 92/24, H04L 41/06, H04L 41/0893, H04L 43/00, H04L 41/0894

(54) **PERFORMANCE MEASUREMENTS FOR NETWORK EXPOSURE FUNCTION ON SERVICE PARAMETER PROVISIONING, POLICY NEGOTIATION, AND CONNECTION ESTABLISHMENT**
LEISTUNGSMESSUNGEN FÜR NETZWERKEXPOSITIONSFUNKTION BEI DIENSTPARAMETERBEREITSTELLUNG, RICHTLINIENAUSHANDLUNG UND VERBINDUNGSAUFBAU
MESURES DE PERFORMANCE POUR FONCTION D'EXPOSITION DE RÉSEAU SUR LA FOURNITURE DE PARAMÈTRES DE SERVICE, LA NÉGOCIATION DE POLITIQUE ET L'ÉTABLISSEMENT DE CONNEXION

(30) Priority: 13.01.2021 US 202163136764 P
(43) Date of publication of application: 22.11.2023
(73) Proprietor: Intel Corporation, Santa Clara, CA 95054 (US)
(72) Inventor: YAO, Yizhi, Chandler, Arizona 85248 (US); CHOU, Joey, Scottsdale, Arizona 85258 (US)
(74) Representative: HGF
(86) International application number: PCT/US2022/011844
(87) International publication number: WO 2022/155098

(56) References cited:
- WO-A1-2020/033697
- WO-A1-2020/146376
- WO-A1-2020/146376
- US-A1- 2019 215 731
- US-A1- 2020 322 881
- US-B2- 10 887 824
- 3GPP: "3rd Generation Partnership Project;Technical Specification Group Services and System Aspects;Procedures for the 5G System (5GS);Stage 2(Release 16", INTERNET CITATION, 27 March 2020 (2020-03-27), XP002803444, Retrieved from the Internet <URL:https://portal.3gpp.org/desktopmodules/Specifications/SpecificationDetails.aspx?specificationId=3145> [retrieved on 20210623]
- "3rd Generation Partnership Project; Technical Specification Group Services and System Aspects; Procedures for the 5G System (5GS); Stage 2 (Release 16)", 3GPP STANDARD; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.7.0, 17 December 2020 (2020-12-17), Mobile Competence Centre ; 650, route des Lucioles ; F-06921 Sophia-Antipolis Cedex ; France , pages 1 - 603, XP051975175
- "3rd Generation Partnership Project; Technical Specification Group Services and System Aspects; Policy and charging control framework for the 5G System (5GS); Stage 2 (Release 16)", 3GPP STANDARD; 3GPP TS 23.503, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.7.0, 17 December 2020 (2020-12-17), Mobile Competence Centre ; 650, route des Lucioles ; F-06921 Sophia-Antipolis Cedex ; France , pages 1 - 119, XP051975176

## Description

### TECHNICAL FIELD

Various embodiments generally may relate to the field of wireless communications.

### BACKGROUND

Wireless devices are becoming widely prevalent and are increasingly using wireless channels. The 3^{rd} Generation Partnership Program (3GPP) is developing one or more standards for wireless communications.

WO 2020/146376 describes instructions for monitoring quality-of- service (QoS) flows in a wireless cellular network. The instructions, upon execution by one or more processors, cause the one or more processors to: obtain a signal in the wireless cellular network; determine, based on the signal, a QoS flow event for a session management function (SMF); determine performance measurements related to the QoS flow event; and modify at least one of the QoS flows in the wireless cellular network based on the performance measurements. Example QoS flow events include a request to create or modify a QoS flow, a successfully created or modified Qos flow, a QoS flow that failed to be created or modified, etc.

US 2019/215731 relates to monitoring and reporting of service performance in a roaming scenario. According to the teaching of US 2019/215731 a HPCF receives from an application function, a first message requesting to subscribe to a QoS event for a data flow of a wireless device. The first message comprises a first information element indicating a first QoS event; and a second information element indicating a first QoS value for the first QoS event. The HPCF determines a QoS reporting policy for the data flow based on the first QoS event and the first QoS value. The QoS reporting policy comprises a second QoS event and a second QoS value. The HPCF sends to a VPCF, a second message comprising the QoS reporting policy. The HPCF receives from the VPCF, a measurement result comprising: a third information element indicating an occurrence of the second QoS event; and a fourth information element indicating a measured QoS value. The HPCF sends the measurement result to the application function.

3GPP TS 23.502 V16.4.0 (2020-03-27); 3rd Generation Partnership Project; Technical Specification Group Services and System Aspects; Procedures for the 5G System (5GS); defines the Stage 2 procedures and Network Function Services for the 5G system architecture.

### BRIEF DESCRIPTION OF THE DRAWINGS

The detailed description is set forth with reference to the accompanying drawings. The use of the same reference numerals indicates similar or identical components or elements; however, different reference numerals may be used as well to indicate components or elements, which may be similar or identical. Various embodiments of the disclosure may utilize elements and/or components other than those illustrated in the drawings, and some elements and/or components may not be present in various embodiments. Depending on the context, singular terminology used to describe an element or a component may encompass a plural number of such elements or components and vice versa.
FIG. 1 illustrates an example Fifth Generation System (5GS) architecture, in accordance with one or more embodiments of the disclosure.
FIG. 2 illustrates example system architectures, in accordance with one or more embodiments of the disclosure.
FIG. 3 illustrates an example method, in accordance with one or more embodiments of this disclosure.
FIG. 4 illustrates an example network, in accordance with one or more embodiments of this disclosure.
FIG. 5 illustrates an example wireless network, in accordance with one or more embodiments of this disclosure.
FIG. 6 illustrates an example of a computing system, in accordance with one or more embodiments of this disclosure.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers in the figures refer to like elements throughout. Hence, if a feature is used across several drawings, the number used to identify the feature in the drawing where the feature first appeared will be used in later drawings.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

For delivering a non-IP data delivery (NIDD) service that may be associated with a Fifth Generation (5G) cellular network, a connection between a network exposure function (NEF) and a session management function (SMF) of the 5G system architecture may need to be established for a protocol data unit (PDU) session for a user equipment (UE). The SMF-NEF connection is used for transferring the NIDD data using the 5G system architecture, therefore the performance of the SMF-NEF connection establishment impacts users' experience with a NIDD service.

An application function (AF) of the 5G system architecture may also need to provide service-specific parameters to the 5G system via the NEF in order to support a service that is not provided by the public land mobile network (PLMN). The 5G system, after receiving data via the NEF, delivers service-specific parameters for the service to the target UEs.

The service-specific parameter provisioning service provided by the NEF is critical for the 5G system (including the UEs) to support the corresponding services. Therefore, it would be necessary for the operators to monitor the performance of the service-specific parameter provisioning.

The AF may need to negotiate the policies for future background data transfer with the 5G system via the NEF, before the UE's PDU Session establishment. Per a request from the AF, the NEF negotiates with the home policy control function (H-PCF) of the 5G system about the transfer policies for a future background data transfer. The transfer policies may include a desired time window for the background data transfer, a reference to a charging rate for the time window, network area information, and optionally a maximum aggregated bitrate, as described in the 3PGG standard in clause 6.1.2.4 of TS 23.503, v. 16.7.0 (or any other 3GPP standard).

The AF may apply the negotiated policies for a future PDU Session at some point.

The policies for the background data transfer have strong relevance to users' experience, therefore the measurements may be needed to monitor the performance of policy negotiation for future background data transfer.

Existing techniques for providing services using 5G systems do not monitor the performance of the service-specific parameter provisioning as described herein.

Among other things, one or more embodiments of the present disclosure may be directed to generating measurements related to at least service parameter provisioning, policy negotiation, and/or connection establishment (as well as any other types of measurements) for a NEF in a Fifth Generation System (5GS) cellular network. The measurements related to service parameter provisioning, policy negotiation, and/or connection establishment may be fundamental data reflecting the performance of the 5GS in terms of supporting external applications.

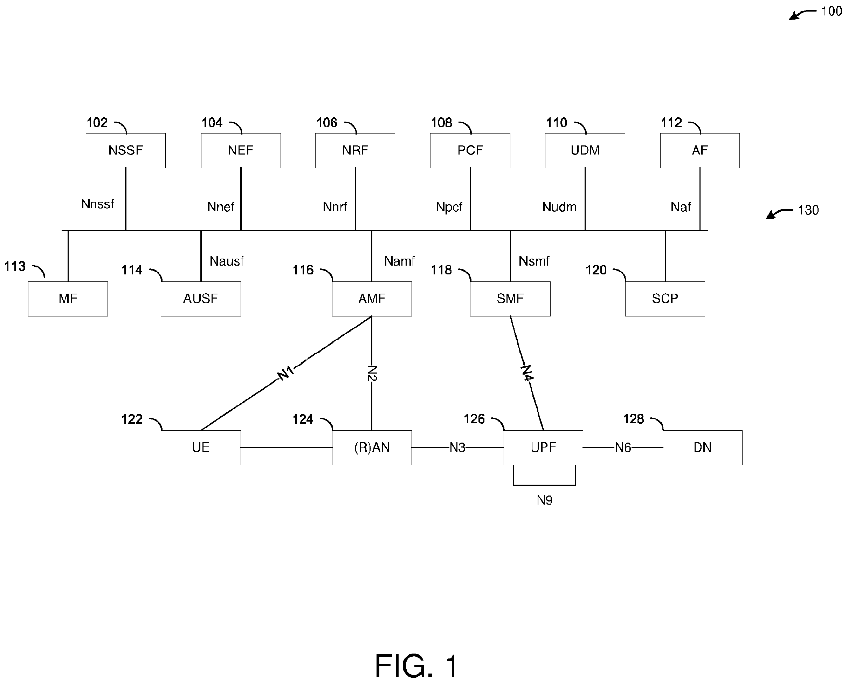

In one or more embodiments, these measurements may specifically relate to communications occurring on an NEF-SMF interface and/or an NEF-AF interface in conjunction with a NIDD service associated with the 5GS cellular network. The SMF-NEF connection is used for transferring the NIDD data, therefore the performance of the SMF-NEF connection establishment impacts users' experience with the NIDD service. The AF may need to provide service-specific parameters to the 5G system via the NEF in order to support the service not provided by the PLMN. The 5GS, after receiving via NEF, delivers the service-specific parameters to the target UEs. The service-specific parameter provisioning service provided by NEF is critical for the 5GS (including the UEs) to support these services. Therefore, it is important for the operators to monitor the performance of the service-specific parameter provisioning. Additionally, the measurements may be taken from the perspective of the NEF because the NEF may be facilitating the communications. However, the measurements may also be taken from any other interface that may exist in the Fifth Generation System (5GS) network architecture as illustrated in FIG. 1.

In one or more embodiments, any of the measurements mentioned herein may be collected using any number of different types of methods. As one example, the measurements may be obtained using one or more cumulative counters. A cumulative counter may be a counter associated with a value (for example, an integer value or any other type of value), where the value may increment based on a triggering event occurring. There may exist any number of different cumulative counters, and each counter may be associated with a particular triggering event. Each triggering event may also be associated with a specific type of event that is related to a type of measurement. For example, it may be desired to measure a number of SMF-NEF connection creation requests that are sent over an NEF-SMF interface (for example, as shown in the system architecture 100 of FIG. 1). The triggering event for this type of measurement may include such a request being transmitted over this interface. That is, when one request is transmitted, the request may be identified and the counter may be incremented based on identifying the request. The counter may be incremented again based on identifying a second request. After these two increments, the value of the cumulative counter for this particular measurement may be a value of two, for example. Additionally, a cumulative counter may be reset after a particular period of time as well. For example, after 30 minutes (or any other amount of time), the cumulative counter associated with the measurement may be reset from the value of two to a value of zero.

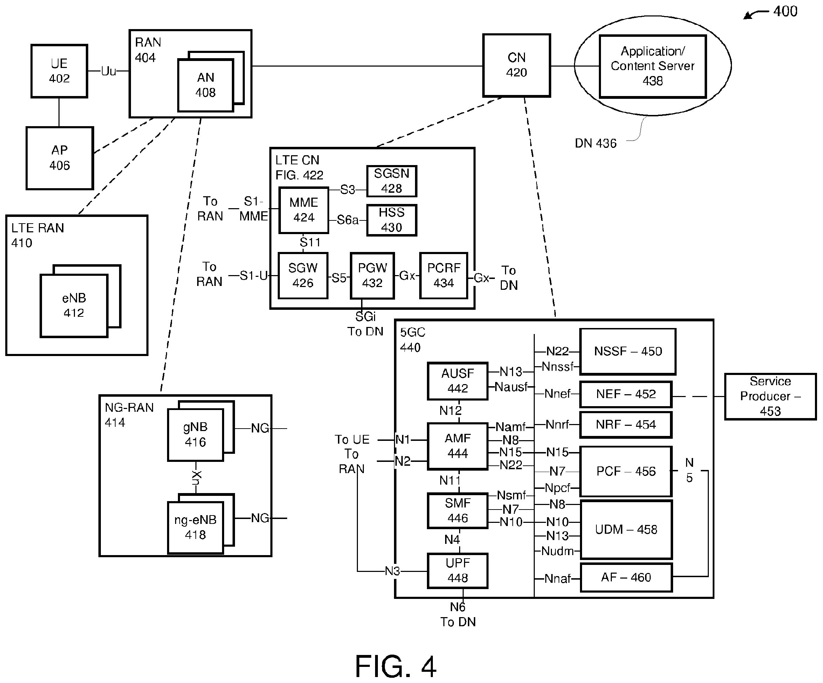

In one or more embodiments, a service producer collects the raw performance measurements from network functions (NFs), and then generates the performance measurements for NFs to provide to third-party systems. In embodiments, the NF is the NEF, and the service producer may be implemented within the NEF or as a standalone management function. That is, the NEF collects raw measurements, provides the raw measurements to the service producer, and the service producer then provides the measurements to the third party system. The service producer also performs processing on the raw measurements before sending the measurements to the third-party system. In embodiments, the service producer converts the raw measurements into standardized measurements. In some cases, the third-party system may be a network operator that may evaluate the measurements and take an action with respect to the network based on the measurements. In some cases, the measurements may also be provided to an automated system that may perform the same or different analyses and automatically perform changes to a network based on the measurements. Particularly, the measurements may be used for network optimization in some cases. Any of the elements described above (for example, service producer, NF, NEF, AF, SMF, etc.) may be implemented in hardware associated with the 5GS cellular network. For example, any of the hardware described with reference to any of FIGS. 4-6.

Turning to the figures, FIG. 1 illustrates a Fifth Generation System (5GS) 100 architecture. Any of the elements illustrated in FIG. 1 may be implemented in hardware. For example, any of the hardware described with reference to any of FIGS. 4-6.

The 5GS 100 may include three main components: a UE 122, 5G access network (AN) 124, 5G core network (5GC) 130. The 5GC 130 may support a plurality of network functions. An application function (AF) 112 may support application influence on traffic routing, accessing a network exposure function (NEF), interaction with policy framework for policy control, etc. An NEF 104 may support exposure of capabilities and events, secure provision of information from external application to 3GPP network, translation of internal/external information, etc. A session management function (SMF) 118 may support session management (e.g., session establishment, modification, and release), UE IP address allocation and management, dynamic host configuration protocol (DHCP) functions, termination of non-access stratum (NAS) signaling related to session management, downlink (DL) data notification, traffic steering configuration for user plane function (UPF) for proper traffic routing, etc. A user plane function (UPF) 126 may support packet routing and forwarding, packet inspection, quality of service handling, acts as external protocol data unit (PDU) session point of interconnect to data network (DN) 128, and is an anchor point for intra and inter-radio access technology (RAT) mobility. A network slice selection function (NSSF) 102 may support selecting of network slice instances to serve a UE, determining the allowed network slice selection assistance information (NSSAI), determining the access and mobility management function (AMF) set to be used to serve the UE.

An AF may send requests to influence SMF routing decisions for user plane (UP) traffic of PDU sessions. The AF requests may influence UPF (re)selection and allow routing of user traffic to a local access (identified by a data network access identifier (DNAI)) to a data network. An AF may request the traffic influence via an NEF. The fulfilment of traffic influence per the request from the AF means that the user data traffic is routed according to the requirements from the application. Therefore, the performance of AF traffic influence may need to be monitored.

The NEF allows an external party (e.g., an AF) to provision information (e.g., external parameters), such as expected UE behavior and service-specific parameters or the Fifth Generation (5G) virtual network (VN) group information to 5G network functions. Failed external parameter provisioning would impact the UE behavior or service fulfilment. Therefore, the performance of external parameter provisioning may need to be monitored.

The 5GS 100 may also include a NF repository function (NRF) 106, policy control function (PCF) 108, unified data management (UDM) 110, service communication proxy (SCP) 120, authentication server function (AUSF) 114. The NRF 106 may provide service registration and discovery functions that that NFs in the 5GS 100 may discover one another. The PCF 108 may provide policy rules for control place functions, such as network slicing, roaming, and mobility management. The PCF 108 may also support quality of service (QoS) and charging control functions. The UDM 110 may generate authentication and key agreement (AKA) credentials. The SCP 120 may perform a number of functions, such as network topology simplification by signaling aggregation and routing, load balancing/load distribution, overload handling, message parameters harmonization to ease multi-vendor integration, message prioritization to increase network throughput under overload situations, among other functions. The AUSF 114 may implement an authentication server and store and relevant keys.

Any of the elements illustrated in FIG. 1 may be implemented in hardware. For example, any of the hardware described with reference to any of FIGS. 4-6.

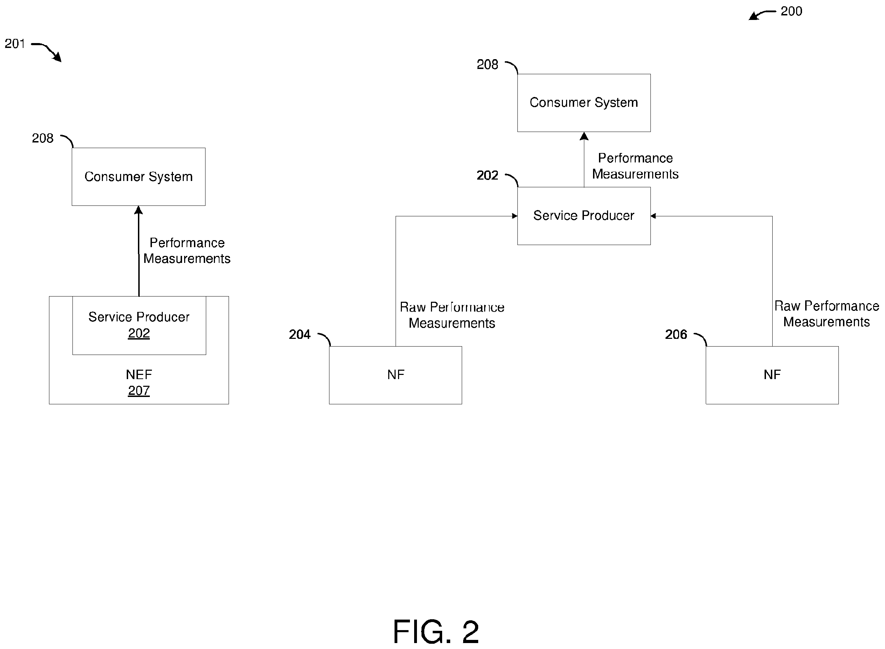

FIG. 2 illustrates example system architectures (for example, system 200 and system 201), in accordance with one or more embodiments of the disclosure.

In one or more embodiments, the system architectures may illustrate that a service producer 202 collects the raw performance measurements from network functions (NFs) (for example, NF 204 and/or NF 206, as well as any other number of NFs), and then generates the performance measurements for NFs to provide to third party systems. In embodiments, the NF is an NEF 207, and the service producer may be implemented within the NEF 207 (illustrated in system 201) or as a standalone management function (illustrated in system 200). That is, the NEF 207 collects raw measurements, provides the raw measurements to the service producer, and the service producer 202 then provides the measurements to the third party system (for example, the consumer system 208). In some cases, the third party system may be a wireless service provider or other third party that evaluates performance based on the measurements, as one non-limiting example of the use of these measurements. The service producer 202 also performs processing on the raw measurements before sending the measurements to the third-party system. In embodiments, the service producer 202 converts the raw measurements into standardized measurements. In some cases, the third-party system may be a network operator that may evaluate the measurements and take an action with respect to the network based on the measurements. In some cases, the measurements may also be provided to an automated system that may perform the same or different analyses and automatically perform changes to a network based on the measurements. Particularly, the measurements may be used for network optimization in some cases.

In one or more embodiments, the measurements that may be taken may include at least SMF-NEF connection creation measurements, SMF-NEF connection release measurements (e.g., see FIG. 1, for example, for a connection between the NEF 104 and the SMF 118), service-specific parameter measurements, background data transfer policy negotiation measurements, and/or any other types of measurements. These different types of measurements may be referred to herein as "parameters" in some cases. That is, a "parameter" may refer to a specific measurement that may be performed. These specific types of measurements may be described in additional below and may be further defined the 3GPP standard (for example, TS 28.552, v. 17.1.0 based on the template defined in 32.404 (as well as any other 3GPP standard).

Turning to the specific types of measurements, in one or more embodiments, the SMF-NEF connection creation measurements may include at least a number of SMF-NEF connection creation requests, a number of successful SMF-NEF connection creations, and/or a number of failed SMF-NEF connection creations. These examples are not meant to be limiting.

In one or more embodiments, any of the measurements mentioned herein may be collected using any number of different types of methods performed by the NEF 207 and/or the NFs 204 and 206. As one example, the measurements may be obtained using one or more cumulative counters. A cumulative counter may be a counter associated with a value (for example, an integer value or any other type of value), where the value may increment based on a triggering event occurring. There may exist any number of different cumulative counters, and each counter may be associated with a particular triggering event. Each triggering event may also be associated with a specific type of event that is related to a type of measurement. For example, it may be desired to measure a number of SMF-NEF connection creation requests that are sent over an NEF-SMF interface (for example, as shown in the system architecture 100 of FIG. 1). The triggering event for this type of measurement may include such a request being transmitted over this interface. That is, when one request is transmitted, the request may be identified and the counter may be incremented based on identifying the request. The counter may be incremented again based on identifying a second request. After these two increments, the value of the cumulative counter for this particular measurement may be a value of two, for example. Additionally, a cumulative counter may be reset after a particular period of time as well. For example, after 30 minutes (or any other amount of time), the cumulative counter associated with the measurement may be reset from the value of two to a value of zero. **In** some cases, the counter may be maintained by the NEF 207 and/or the NFs 204 and 206, however, the counter may also be maintained at any other location as well.

In one or more embodiments, the SMF-NEF connection creation requests may provide an indication of the number of SMF-NEF connection creation requests received by the NEF from the SMF. The triggering event for this measurement may include receipt by the NEF of a Nnef_SMContext_Create request message from the SMF. This measurement may be defined further in the 3GPP standard (for example, TS 23.502, v. 16.7.0, or any other 3GPP standard).

In one or more embodiments, the number of successful SMF-NEF connection creations may provide an indication of the number of successful SMF-NEF connection creations by the NEF. The triggering event for this measurement may include transmission by the NEF of a Nnef_SMContext_Create response message to SMF indicating a successful SMF-NEF connection creation. This measurement may be defined further in the 3GPP standard (for example, TS 29.541, v. 16.2.0, or any other 3GPP standard).

In one or more embodiments, the number of failed SMF-NEF connection creations may provide the number of failed SMF-NEF connection creations by the NEF. The triggering event for this measurement may include transmission by the NEF of a Nnef_SMContext_Create response message to the SMF indicating a failed SMF-NEF connection creation. This measurement may be defined further in the 3GPP standard (for example, TS 29.541, or any other 3GPP standard).

In one or more embodiments, the SMF-NEF connection release measurements may include at least a number of SMF-NEF connection release requests, a number of successful SMF-NEF connection releases, and/or a number of failed SMF-NEF connection releases.

In one or more embodiments the number of SMF-NEF connection release requests may provide an indication of the number of SMF-NEF connection release requests received by the NEF from the SMF. The triggering event for this measurement may include receipt by the NEF of a Nnef_SMContext_Delete request message from the SMF. This measurement may be defined further in the 3GPP standard (for example, TS 23.502, or any other 3GPP standard).

In one or more embodiments, the number of successful SMF-NEF connection release may provide an indication of the number of successful SMF-NEF connection releases by the NEF. The triggering event for this measurement may include for this measurement may include transmission by the NEF of a Nnef_SMContext_Delete response message to AF indicating a successful SMF-NEF connection release. This measurement may be defined further in the 3GPP standard (for example, TS 29.541, or any other 3GPP standard).

In one or more embodiments, the number of failed SMF-NEF connection releases may provide an indication of the number of failed SMF-NEF connection releases by the NEF. The triggering event for this measurement may include for this measurement may include transmission by the NEF of a Nnef_SMContext_Delete response message to AF indicating a failed SMF-NEF connection release. This measurement may be defined further in the 3GPP standard (for example, TS 29.541, or any other 3GPP standard).

In one or more embodiments, the service-specific parameters measurements may include at least service-specific parameters creation, service-specific parameters update, and/or service-specific parameters deletion.

In one or more embodiments, the service-specific parameters creation may include at least number of service-specific parameters creation requests, number of successful service-specific parameters creation, and/or number of failed service-specific parameters creations.

In one or more embodiments, number of service-specific parameters creation requests may provide an indication of the number of service-specific parameters creation requests received by the NEF from AF. The triggering event for this measurement may include receipt by the NEF of a Nnef_ServiceParameter_Create request message from AF. This measurement may be defined further in the 3GPP standard (for example, TS 23.502, or any other 3GPP standard).

In one or more embodiments, the number of successful service-specific parameters creations may provide an indication of the number of successful service-specific parameters creations by the NEF. The triggering event for this measurement may include for this measurement may include transmission by the NEF of a Nnef_ServiceParameter_Create response message to SMF indicating a successful service-specific parameters creation. This measurement may be defined further in the 3GPP standard (for example, TS 29.522, or any other 3GPP standard).

In one or more embodiments, the number of failed service-specific parameters creations may provide an indication of the number of failed service-specific parameters creations by the NEF. The triggering event for this measurement may include for this measurement may include transmission by the NEF of a Nnef_ServiceParameter_Create response message to AF indicating a failed service-specific parameters creation. This measurement may be defined further in the 3GPP standard (for example, TS 29.522, or any other 3GPP standard).

In one or more embodiments, service-specific parameters update measurements may include at least number of service-specific parameters update requests, number of successful service-specific parameters updates, and/or number of failed service-specific parameters updates.

In one or more embodiments, the number of service-specific parameters update requests may provide an indication of the number of service-specific parameters update requests received by the NEF from AF. The triggering event for this measurement may include for this measurement may include receipt by the NEF of a Nnef_ServiceParameter_Update request message from AF. This measurement may be defined further in the 3GPP standard (for example, TS 23.502, or any other 3GPP standard).

In one or more embodiments, the number of successful service-specific parameters updates may provide an indication of the number of successful service-specific parameters updates by the NEF. The triggering event for this measurement may include for this measurement may include transmission by the NEF of a Nnef_ServiceParameter_Update response message to AF indicating a successful service-specific parameters update. This measurement may be defined further in the 3GPP standard (for example, TS 29.522, v. 16.6.0, or any other 3GPP standard).

In one or more embodiments, the number of failed service-specific parameters updates may provide an indication of the number of failed service-specific parameters updates by the NEF. The triggering event for this measurement may include for this measurement may include transmission by the NEF of a Nnef_ServiceParameter_Update response message to AF indicating a failed service-specific parameters update. This measurement may be defined further in the 3GPP standard (for example, 29.522, or any other 3GPP standard).

In one or more embodiments, the service-specific parameters deletion may include at least number of service-specific parameters deletion requests, number of successful service-specific parameters deletions, and/or number of failed service-specific parameters deletions.

In one or more embodiments, the number of service-specific parameters deletion requests may provide an indication of the number of service-specific parameters deletion requests received by the NEF from AF. The triggering event may include for this measurement may include receipt by the NEF of a Nnef_ServiceParameter_Delete request message from AF. This measurement may be defined further in the 3GPP standard (for example, TS 23.502, or any other 3GPP standard).

In one or more embodiments, the number of successful service-specific parameters deletions may provide an indication of the number of successful service-specific parameters deletions by the NEF. The triggering event may include for this measurement may include transmission by the NEF of a Nnef_ServiceParameter_Delete response message to AF indicating a successful service-specific parameters deletion. This measurement may be defined further in the 3GPP standard (for example, TS 29.522, or any other 3GPP standard).

In one or more embodiments, the number of failed service-specific parameters deletions may provide an indication of the number of failed service-specific parameters deletions by the NEF. The triggering event for this measurement may include transmission by the NEF of a Nnef_ServiceParameter_Delete response message to AF indicating a failed service-specific parameters deletion. This measurement may be defined further in the 3GPP standard (for example, TS 29.522, or any other 3GPP standard).

In one or more embodiments, the background data transfer policy negotiation measurements may include at least number of background data transfer policy negotiation creation requests, number of successful background data transfer policy negotiation creations, number of failed background data transfer policy negotiation creations, number of background data transfer policy negotiation update requests, number of successful background data transfer policy negotiation updates, and/or number of failed background data transfer policy negotiation updates.

In one or more embodiments, the number of background data transfer policy negotiation creation requests may provide an indication of the number of background data transfer policy negotiation creation requests received by the NEF from AF. The triggering event for this measurement may include for this measurement may include receipt by the NEF of a Nnef_BDTPNegotiation_Create request message from AF. This measurement may be defined further in the 3GPP standard (for example, TS 23.502, or any other 3GPP standard).

In one or more embodiments, the number of successful background data transfer policy negotiation creations may provide an indication of the number of successful background data transfer policy negotiation creations by the NEF. The triggering event for this measurement may include for this measurement may include transmission by the NEF of a Nnef_BDTPNegotiation_Create response message to SMF indicating a successful background data transfer policy negotiation creation. This measurement may be defined further in the 3GPP standard (for example, TS 29.522, or any other 3GPP standard).

In one or more embodiments, the number of failed background data transfer policy negotiation creations may provide an indication of the number of failed background data transfer policy negotiation creations by the NEF. The triggering event for this measurement may include for this measurement may include transmission by the NEF of a Nnef_BDTPNegotiation_Create response message to AF indicating a failed background data transfer policy negotiation creation. This measurement may be defined further in the 3GPP standard (for example, TS 29.522, or any other 3GPP standard).

In one or more embodiments, the number of background data transfer policy negotiation update requests may provide an indication of the number of background data transfer policy negotiation update requests received by the NEF from AF. The triggering event may include for this measurement may include receipt by the NEF of a Nnef_BDTPNegotiation Update request message from AF. This measurement may be defined further in the 3GPP standard (for example, TS 23.502, or any other 3GPP standard).

In one or more embodiments, the number of successful background data transfer policy negotiation updates may provide an indication of the number of successful background data transfer policy negotiation updates by the NEF. The triggering event for this measurement may include transmission by the NEF of a Nnef_BDTPNegotiation Update response message to AF indicating a successful background data transfer policy negotiation update. This measurement may be defined further in the 3GPP standard (for example, TS 29.522, or any other 3GPP standard).

In one or more embodiments, the number of failed background data transfer policy negotiation updates may provide an indication of the number of failed background data transfer policy negotiation updates by the NEF. The triggering event for this measurement may include for this measurement may include transmission by the NEF of a Nnef_BDTPNegotiation Update response message to AF indicating a failed background data transfer policy negotiation. This measurement may be defined further in the 3GPP standard (for example, TS 29.522, or any other 3GPP standard).

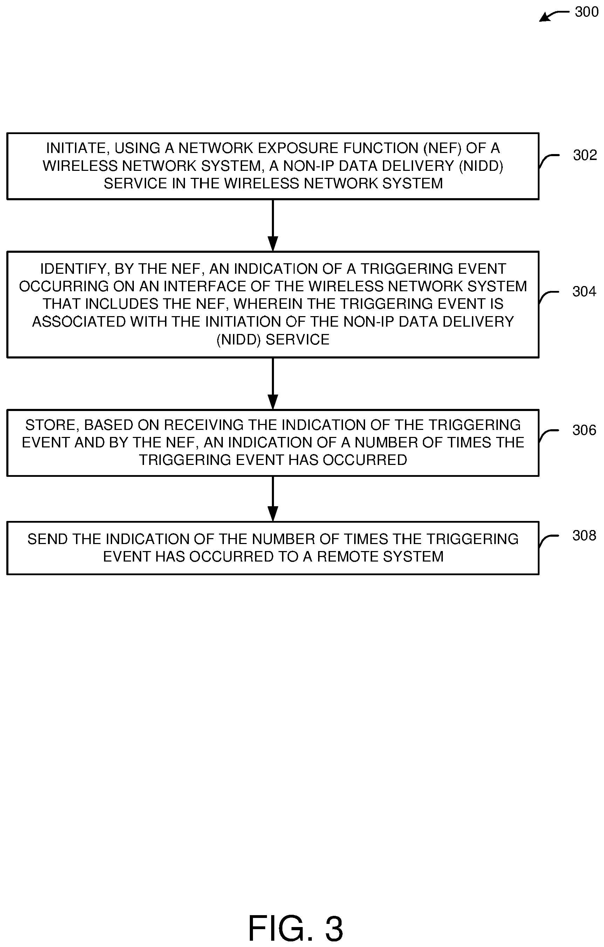

FIG. 3 illustrates an example method 300, in accordance with one or more embodiments of this disclosure.

Block 302 of the method 300 may include initiating, using a network exposure function (NEF) of a wireless network system, a NF service in the wireless network system. identifying, by the NEF, an indication of a triggering event associated with a parameter occurring on an interface of the wireless network system that includes the NEF, wherein the triggering event is associated with the initiation of the non-IP data delivery (NIDD) service.

At block 304, the method 400 may include storing, based on receiving the indication of the triggering event and by the NEF, an indication of a number of times the triggering event has occurred.

At block 306, the method 400 may include generating and sending the signal including the indication of the number of times the triggering event has occurred to a remote system.

In one or more embodiments, the service producer of the NEF sends the indication of the number of times the triggering event has occurred.

In one or more embodiments, a service consumer remote from the NEF receives the indication of the number of times the triggering event has occurred.

In one or more embodiments, storing the indication of a number of times the triggering event has occurred further comprises incrementing a counter associated with the triggering event.

In one or more embodiments, the interface comprises either an interface between the NEF and a session management function (SMF) within the wireless network system or an interface between the NEF and an application function (AF) within the wireless network system.

In one or more embodiments, the NF service is for non-IP data delivery (NIDD) and the indication of the number of times the triggering event includes at least one of: a number of SMF-NEF connection creation requests, a number of successful SMF-NEF connection creations, or a number of failed SMF-NEF connection creations, a number of SMF-NEF connection release requests, a number of successful SMF-NEF connection releases, or a number of failed SMF-NEF connection releases.

In one or more embodiments, the NF service is for service specific parameter provisioning and the indication of the number of times the triggering event includes at least one of: a number of service-specific parameters creation requests, a number of successful service-specific parameters creations, a number of failed service-specific parameters creations, a number of service-specific parameters update requests, a number of successful service-specific parameters updates, a number of failed service-specific parameters updates, a number of service-specific parameters deletion requests, a number of successful service-specific parameters deletions, or a number of failed service-specific parameters deletions.

FIG. 4 illustrates a network 400 in accordance with various embodiments. Network 400 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 400 may include a UE 402, which may include any mobile or non-mobile computing device designed to communicate with a RAN 404 via an over-the-air connection. The UE 402 may be communicatively coupled with the RAN 404 by a Uu interface. The UE 402 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 400 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 402 may additionally communicate with an AP 406 via an over-the-air connection. The AP 406 may manage a WLAN connection, which may serve to offload some/all network traffic from the RAN 404. The connection between the UE 402 and the AP 406 may be consistent with any IEEE 802.11 protocol, wherein the AP 406 could be a wireless fidelity (Wi-Fi^{®}) router. In some embodiments, the UE 402, RAN 404, and AP 406 may utilize cellular-WLAN aggregation (for example, LWA/LWIP). Cellular-WLAN aggregation may involve the UE 402 being configured by the RAN 404 to utilize both cellular radio resources and WLAN resources.

The RAN 404 may include one or more access nodes, for example, AN 408. AN 408 may terminate air-interface protocols for the UE 402 by providing access stratum protocols including RRC, PDCP, RLC, MAC, and L1 protocols. In this manner, the AN 408 may enable data/voice connectivity between CN 420 and the UE 402. In some embodiments, the AN 408 may be implemented in a discrete device or as one or more software entities running on server computers as part of, for example, a virtual network, which may be referred to as a CRAN or virtual baseband unit pool. The AN 408 be referred to as a BS, gNB, RAN node, eNB, ng-eNB, NodeB, RSU, TRxP, TRP, etc. The AN 408 may be a macrocell base station or a low power base station for providing femtocells, picocells or other like cells having smaller coverage areas, smaller user capacity, or higher bandwidth compared to macrocells.

In embodiments in which the RAN 404 includes a plurality of ANs, they may be coupled with one another via an X2 interface (if the RAN 404 is an LTE RAN) or an Xn interface (if the RAN 404 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 404 may each manage one or more cells, cell groups, component carriers, etc. to provide the UE 402 with an air interface for network access. The UE 402 may be simultaneously connected with a plurality of cells provided by the same or different ANs of the RAN 404. For example, the UE 402 and RAN 404 may use carrier aggregation to allow the UE 402 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 404 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 402 or AN 408 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 404 may be an LTE RAN 410 with eNBs, for example, eNB 412. The LTE RAN 410 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 404 may be an NG-RAN 414 with gNBs, for example, gNB 416, or ng-eNBs, for example, ng-eNB 418. The gNB 416 may connect with 5G-enabled UEs using a 5G NR interface. The gNB 416 may connect with a 5G core through an NG interface, which may include an N2 interface or an N3 interface. The ng-eNB 418 may also connect with the 5G core through an NG interface, but may connect with a UE via an LTE air interface. The gNB 416 and the ng-eNB 418 may connect with each other over an Xn interface.

In some embodiments, the NG interface may be split into two parts, an NG user plane (NG-U) interface, which carries traffic data between the nodes of the NG-RAN 414 and a UPF 448 (e.g., N3 interface), and an NG control plane (NG-C) interface, which is a signaling interface between the nodes of the NG-RAN 414 and an AMF 444 (e.g., N2 interface).

The NG-RAN 414 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 402 can be configured with multiple BWPs where each BWP configuration has a different SCS. When a BWP change is indicated to the UE 402, the SCS of the transmission is changed as well. Another use case example of BWP is related to power saving. In particular, multiple BWPs can be configured for the UE 402 with different amount of frequency resources (for example, PRBs) to support data transmission under different traffic loading scenarios. A BWP containing a smaller number of PRBs can be used for data transmission with small traffic load while allowing power saving at the UE 402 and in some cases at the gNB 416. A BWP containing a larger number of PRBs can be used for scenarios with higher traffic load.

The RAN 404 is communicatively coupled to CN 420 that includes network elements to provide various functions to support data and telecommunications services to customers/subscribers (for example, users of UE 402). The components of the CN 420 may be implemented in one physical node or separate physical nodes. In some embodiments, NFV may be utilized to virtualize any or all of the functions provided by the network elements of the CN 420 onto physical compute/storage resources in servers, switches, etc. A logical instantiation of the CN 420 may be referred to as a network slice, and a logical instantiation of a portion of the CN 420 may be referred to as a network sub-slice.

In some embodiments, the CN 420 may be an LTE CN 422, which may also be referred to as an EPC. The LTE CN 422 may include MME 424, SGW 426, SGSN 428, HSS 430, PGW 432, and PCRF 434 coupled with one another over interfaces (or "reference points") as shown. Functions of the elements of the LTE CN 422 may be briefly introduced as follows.

The MME 424 may implement mobility management functions to track a current location of the UE 402 to facilitate paging, bearer activation/deactivation, handovers, gateway selection, authentication, etc.

The SGW 426 may terminate an S1 interface toward the RAN and route data packets between the RAN and the LTE CN 422. The SGW 426 may be a local mobility anchor point for inter-RAN node handovers and also may provide an anchor for inter-3GPP mobility. Other responsibilities may include lawful intercept, charging, and some policy enforcement.

The SGSN 428 may track a location of the UE 402 and perform security functions and access control. In addition, the SGSN 428 may perform inter-EPC node signaling for mobility between different RAT networks; PDN and S-GW selection as specified by MME 424; MME selection for handovers; etc. The S3 reference point between the MME 424 and the SGSN 428 may enable user and bearer information exchange for inter-3GPP access network mobility in idle/active states.

The HSS 430 may include a database for network users, including subscription-related information to support the network entities' handling of communication sessions. The HSS 430 can provide support for routing/roaming, authentication, authorization, naming/addressing resolution, location dependencies, etc. An S6a reference point between the HSS 430 and the MME 424 may enable transfer of subscription and authentication data for authenticating/authorizing user access to the LTE CN 420.

The PGW 432 may terminate an SGi interface toward a data network (DN) 436 that may include an application/content server 438. The PGW 432 may route data packets between the LTE CN 422 and the data network 436. The PGW 432 may be coupled with the SGW 426 by an S5 reference point to facilitate user plane tunneling and tunnel management. The PGW 432 may further include a node for policy enforcement and charging data collection (for example, PCEF). Additionally, the SGi reference point between the PGW 432 and the data network 436 may be an operator external public, a private PDN, or an intra-operator packet data network, for example, for provision of IMS services. The PGW 432 may be coupled with a PCRF 434 via a Gx reference point.

The PCRF 434 is the policy and charging control element of the LTE CN 422. The PCRF 434 may be communicatively coupled to the app/content server 438 to determine appropriate QoS and charging parameters for service flows. The PCRF 432 may provision associated rules into a PCEF (via Gx reference point) with appropriate TFT and QCI.

In some embodiments, the CN 420 may be a 5GC 440. The 5GC 440 may include an AUSF 442, AMF 444, SMF 446, UPF 448, NSSF 450, NEF 452 (e.g., the NF 204, the NF 206, the NEF 207 of FIG. 2), NRF 454, PCF 456, UDM 458, and AF 460 coupled with one another over interfaces (or "reference points") as shown. Functions of the elements of the 5GC 440 may be briefly introduced as follows. Any of these elements including in the 5GC 440 may be the same as, or similar to, elements described with respect to any of the other figures described herein. For example, the NEF 452 may be the same as NEF 104 and/or NEF 207, the AF 460 may be the same as the AF 112, etc.

The AUSF 442 may store data for authentication of UE 402 and handle authentication-related functionality. The AUSF 442 may facilitate a common authentication framework for various access types. In addition to communicating with other elements of the 5GC 440 over reference points as shown, the AUSF 442 may exhibit a Nausf service-based interface.

The AMF 444 may allow other functions of the 5GC 440 to communicate with the UE 402 and the RAN 404 and to subscribe to notifications about mobility events with respect to the UE 402. The AMF 444 may be responsible for registration management (for example, for registering UE 402), connection management, reachability management, mobility management, lawful interception of AMF-related events, and access authentication and authorization. The AMF 444 may provide transport for SM messages between the UE 402 and the SMF 446, and act as a transparent proxy for routing SM messages. AMF 444 may also provide transport for SMS messages between UE 402 and an SMSF. AMF 444 may interact with the AUSF 442 and the UE 402 to perform various security anchor and context management functions. Furthermore, AMF 444 may be a termination point of a RAN CP interface, which may include or be an N2 reference point between the RAN 404 and the AMF 444; and the AMF 444 may be a termination point of NAS (N1) signaling, and perform NAS ciphering and integrity protection. AMF 444 may also support NAS signaling with the UE 402 over an N3 IWF interface.

The SMF 446 may be responsible for SM (for example, session establishment, tunnel management between UPF 448 and AN 408); UE IP address allocation and management (including optional authorization); selection and control of UP function; configuring traffic steering at UPF 448 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 444 over N2 to AN 408; and determining SSC mode of a session. SM may refer to management of a PDU session, and a PDU session or "session" may refer to a PDU connectivity service that provides or enables the exchange of PDUs between the UE 402 and the data network 436.

The UPF 448 may act as an anchor point for intra-RAT and inter-RAT mobility, an external PDU session point of interconnect to data network 436, and a branching point to support multi-homed PDU session. The UPF 448 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 448 may include an uplink classifier to support routing traffic flows to a data network.

The NSSF 450 may select a set of network slice instances serving the UE 402. The NSSF 450 may also determine allowed NSSAI and the mapping to the subscribed S-NSSAIs, if needed. The NSSF 450 may also determine the AMF set to be used to serve the UE 402, or a list of candidate AMFs based on a suitable configuration and possibly by querying the NRF 454. The selection of a set of network slice instances for the UE 402 may be triggered by the AMF 444 with which the UE 402 is registered by interacting with the NSSF 450, which may lead to a change of AMF. The NSSF 450 may interact with the AMF 444 via an N22 reference point; and may communicate with another NSSF in a visited network via an N31 reference point (not shown). Additionally, the NSSF 450 may exhibit an Nnssf service-based interface.

The NEF 452 may securely expose services and capabilities provided by 3GPP network functions for third party, internal exposure/re-exposure, AFs (e.g., AF 460), edge computing or fog computing systems, etc. In such embodiments, the NEF 452 may authenticate, authorize, or throttle the AFs. NEF 452 may also translate information exchanged with the AF 460 and information exchanged with internal network functions. For example, the NEF 452 may translate between an AF-Service-Identifier and an internal 5GC information. NEF 452 may also receive information from other NFs based on exposed capabilities of other NFs. This information may be stored at the NEF 452 as structured data, or at a data storage NF using standardized interfaces. The stored information can then be re-exposed by the NEF 452 to other NFs and AFs, or used for other purposes such as analytics. Additionally, the NEF 452 may exhibit an Nnef service-based interface. The NEF 452 may also be associated with a service producer 453 (which may be implemented within the NEF 452 or separately from the NEF 452, as described in additional detail above with respect to FIG. 2. That is, the service producer 453 may be the same as, or similar to, service producer 202.

The NRF 454 may support service discovery functions, receive NF discovery requests from NF instances, and provide the information of the discovered NF instances to the NF instances. NRF 454 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 454 may exhibit the Nnrf service-based interface.

The PCF 456 may provide policy rules to control plane functions to enforce them, and may also support unified policy framework to govern network behavior. The PCF 456 may also implement a front end to access subscription information relevant for policy decisions in a UDR of the UDM 458. In addition to communicating with functions over reference points as shown, the PCF 456 exhibit an Npcf service-based interface.

The UDM 458 may handle subscription-related information to support the network entities' handling of communication sessions, and may store subscription data of UE 402. For example, subscription data may be communicated via an N8 reference point between the UDM 458 and the AMF 444. The UDM 458 may include two parts, an application front end and a UDR. The UDR may store subscription data and policy data for the UDM 458 and the PCF 456, and/or structured data for exposure and application data (including PFDs for application detection, application request information for multiple UEs 402) for the NEF 452. The Nudr service-based interface may be exhibited by the UDR 221 to allow the UDM 458, PCF 456, and NEF 452 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 458 may exhibit the Nudm service-based interface.

The AF 460 may provide application influence on traffic routing, provide access to NEF, and interact with the policy framework for policy control.

In some embodiments, the 5GC 440 may enable edge computing by selecting operator/3^{rd} party services to be geographically close to a point that the UE 402 is attached to the network. This may reduce latency and load on the network. To provide edge-computing implementations, the 5GC 440 may select a UPF 448 close to the UE 402 and execute traffic steering from the UPF 448 to data network 436 via the N6 interface. This may be based on the UE subscription data, UE location, and information provided by the AF 460. In this way, the AF 460 may influence UPF (re)selection and traffic routing. Based on operator deployment, when AF 460 is considered to be a trusted entity, the network operator may permit AF 460 to interact directly with relevant NFs. Additionally, the AF 460 may exhibit an Naf service-based interface.

The data network 436 may represent various network operator services, Internet access, or third party services that may be provided by one or more servers including, for example, application/content server 438.

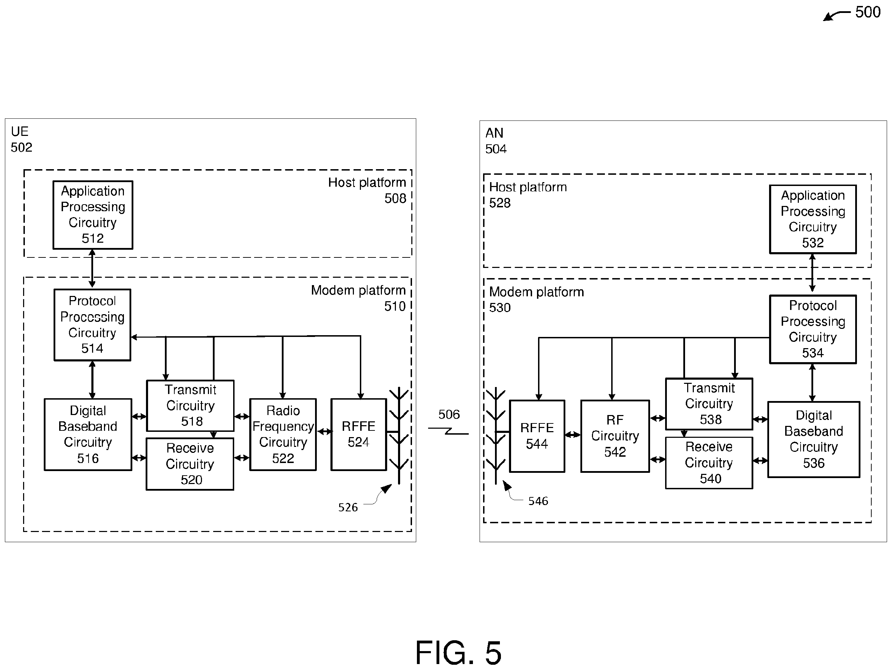

FIG. 5 schematically illustrates a wireless network 500 in accordance with various embodiments. The wireless network 500 may include a UE 502 in wireless communication with an AN 504. The UE 502 and AN 504 may be similar to, and substantially interchangeable with, like-named components described elsewhere herein.

The UE 502 may be communicatively coupled with the AN 504 via connection 506. The connection 506 is illustrated as an air interface to enable communicative coupling, and can be consistent with cellular communications protocols such as an LTE protocol or a 5G NR protocol operating at mmWave or sub-6GHz frequencies.

The UE 502 may include a host platform 508 coupled with a modem platform 510. The host platform 508 may include application processing circuitry 512, which may be coupled with protocol processing circuitry 514 of the modem platform 510. The application processing circuitry 512 may run various applications for the UE 502 that source/sink application data. The application processing circuitry 512 may further implement one or more layer operations to transmit/receive application data to/from a data network. These layer operations may include transport (for example UDP) and Internet (for example, IP) operations
The protocol processing circuitry 514 may implement one or more of layer operations to facilitate transmission or reception of data over the connection 506. The layer operations implemented by the protocol processing circuitry 514 may include, for example, MAC, RLC, PDCP, RRC and NAS operations.

The modem platform 510 may further include digital baseband circuitry 516 that may implement one or more layer operations that are "below" layer operations performed by the protocol processing circuitry 514 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 510 may further include transmit circuitry 518, receive circuitry 520, RF circuitry 522, and RF front end (RFFE) 524, which may include or connect to one or more antenna panels 526. Briefly, the transmit circuitry 518 may include a digital-to-analog converter, mixer, intermediate frequency (IF) components, etc.; the receive circuitry 520 may include an analog-to-digital converter, mixer, IF components, etc.; the RF circuitry 522 may include a low-noise amplifier, a power amplifier, power tracking components, etc.; RFFE 524 may include filters (for example, surface/bulk acoustic wave filters), switches, antenna tuners, beamforming components (for example, phase-array antenna components), etc. The selection and arrangement of the components of the transmit circuitry 518, receive circuitry 520, RF circuitry 522, RFFE 524, and antenna panels 526 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 514 may include one or more instances of control circuitry (not shown) to provide control functions for the transmit/receive components.

A UE reception may be established by and via the antenna panels 526, RFFE 524, RF circuitry 522, receive circuitry 520, digital baseband circuitry 516, and protocol processing circuitry 514. In some embodiments, the antenna panels 526 may receive a transmission from the AN 504 by receive-beamforming signals received by a plurality of antennas/antenna elements of the one or more antenna panels 526.

A UE transmission may be established by and via the protocol processing circuitry 514, digital baseband circuitry 516, transmit circuitry 518, RF circuitry 522, RFFE 524, and antenna panels 526. In some embodiments, the transmit components of the UE 504 may apply a spatial filter to the data to be transmitted to form a transmit beam emitted by the antenna elements of the antenna panels 526.

Similar to the UE 502, the AN 504 may include a host platform 528 coupled with a modem platform 530. The host platform 528 may include application processing circuitry 532 coupled with protocol processing circuitry 534 of the modem platform 530. The modem platform may further include digital baseband circuitry 536, transmit circuitry 538, receive circuitry 540, RF circuitry 542, RFFE circuitry 544, and antenna panels 546. The components of the AN 504 may be similar to and substantially interchangeable with like-named components of the UE 502. In addition to performing data transmission/reception as described above, the components of the AN 508 may perform various logical functions that include, for example, RNC functions such as radio bearer management, uplink and downlink dynamic radio resource management, and data packet scheduling.

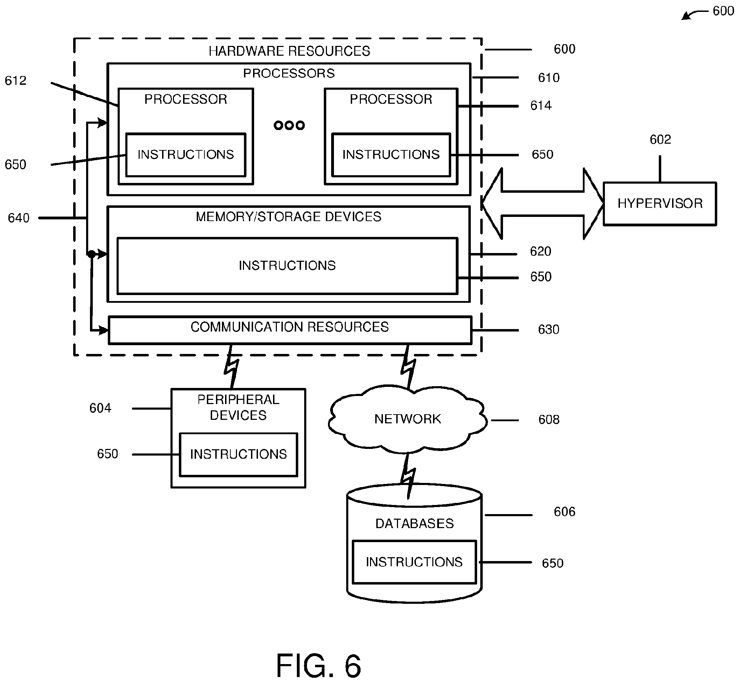

FIG. 6 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 6 shows a diagrammatic representation of hardware resources 600 including one or more processors (or processor cores) 610, one or more memory/storage devices 620, and one or more communication resources 630, each of which may be communicatively coupled via a bus 640 or other interface circuitry. For embodiments where node virtualization (e.g., NFV) is utilized, a hypervisor 602 may be executed to provide an execution environment for one or more network slices/sub-slices to utilize the hardware resources 600.

The processors 610 may include, for example, a processor 612 and a processor 614. The processors 610 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 620 may include main memory, disk storage, or any suitable combination thereof. The memory/storage devices 620 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 630 may include interconnection or network interface controllers, components, or other suitable devices to communicate with one or more peripheral devices 604 or one or more databases 606 or other network elements via a network 608. For example, the communication resources 630 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 650 may comprise software, a program, an application, an applet, an app, or other executable code for causing at least any of the processors 610 to perform any one or more of the methodologies discussed herein. The instructions 650 may reside, completely or partially, within at least one of the processors 610 (e.g., within the processor's cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA.

The term "Special Cell" refers to the PCell of the MCG or the PSCell of the SCG for DC operation; otherwise, the term "Special Cell" refers to the Pcell.

Unless used differently herein, terms, definitions, and abbreviations may be consistent with terms, definitions, and abbreviations defined in 3GPP TR 21.905 v16.0.0 (2019-06) and/or any other 3GPP standard. For the purposes of the present document, the following abbreviations (shown in Table 1) may apply to the examples and embodiments discussed herein.

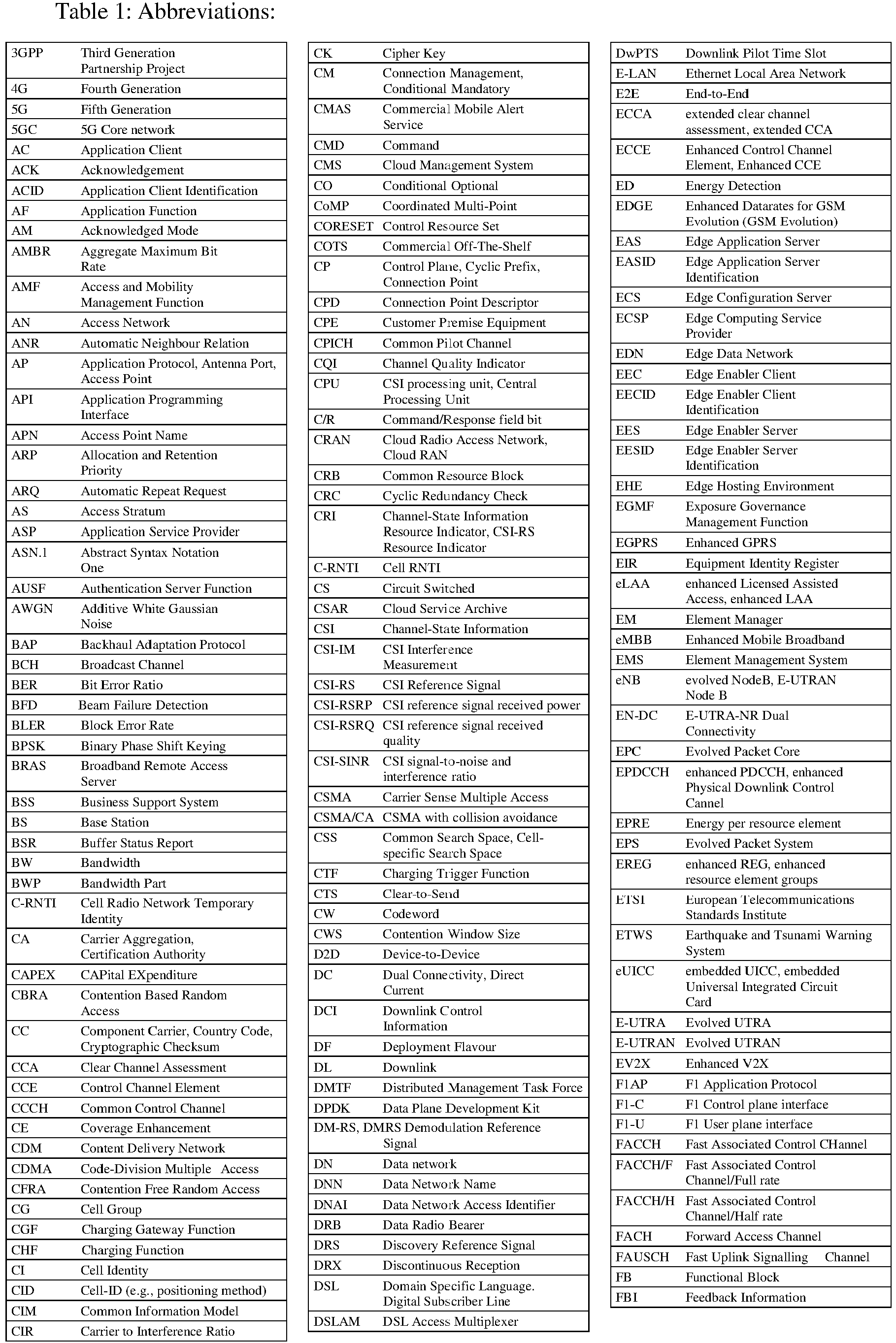

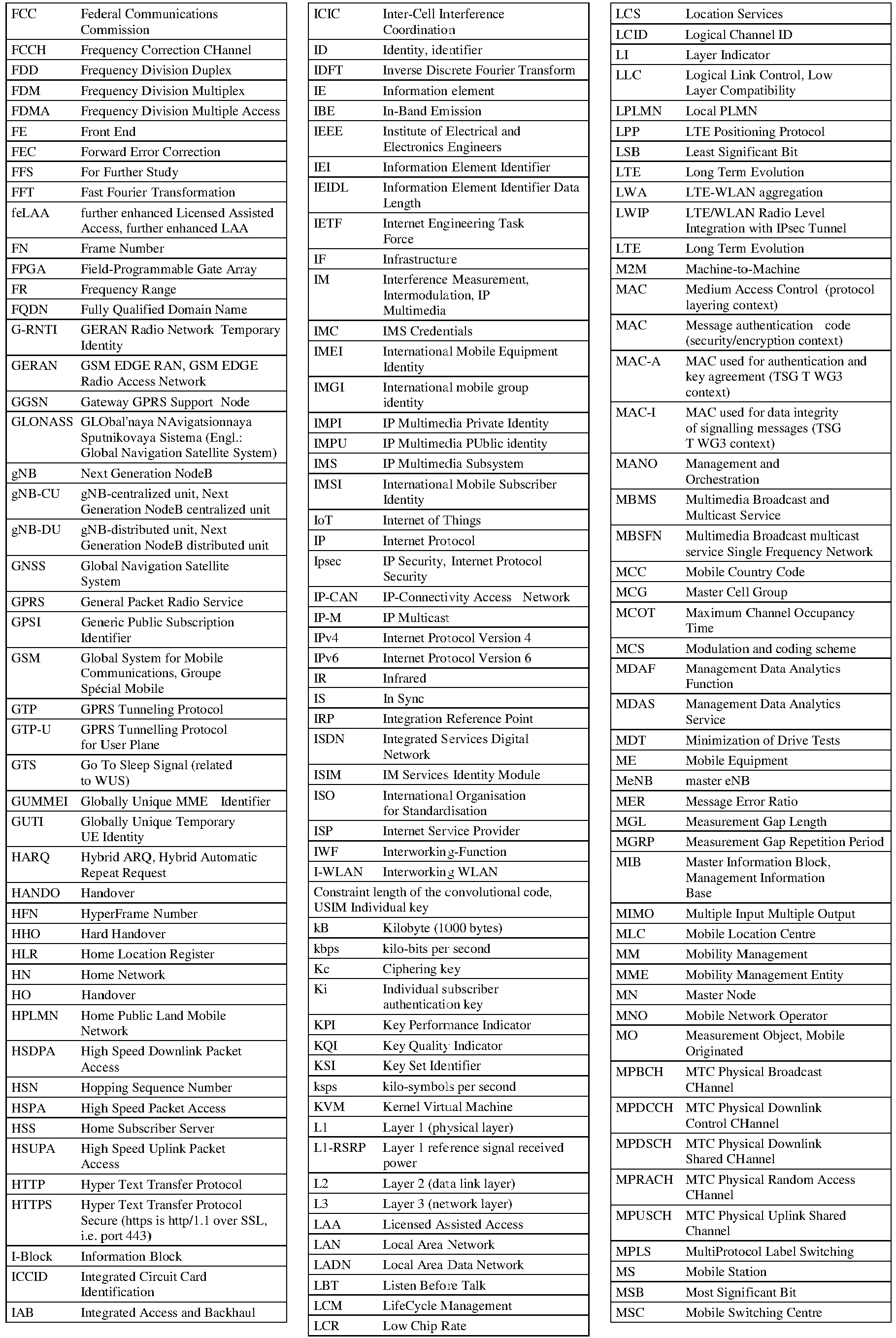

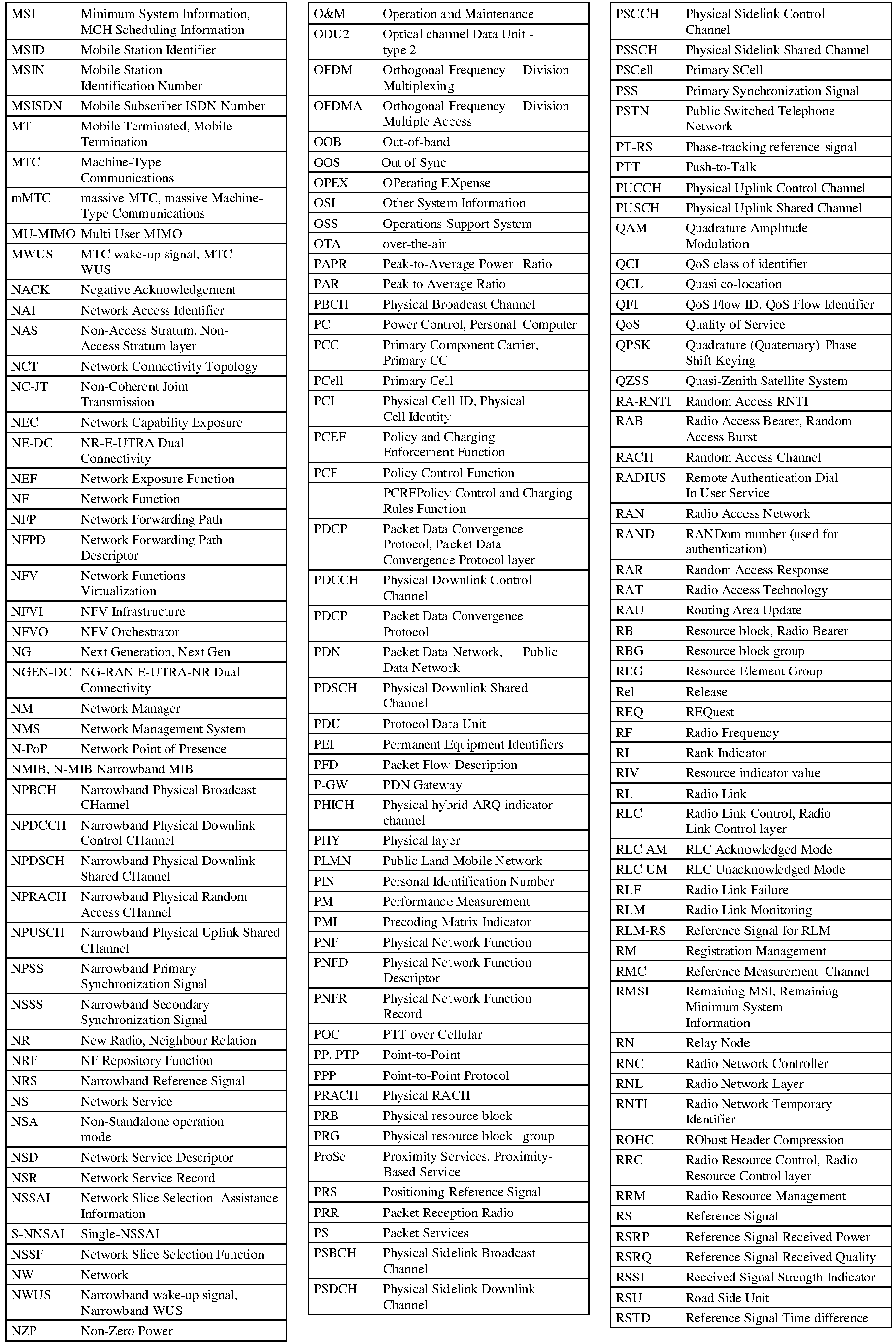

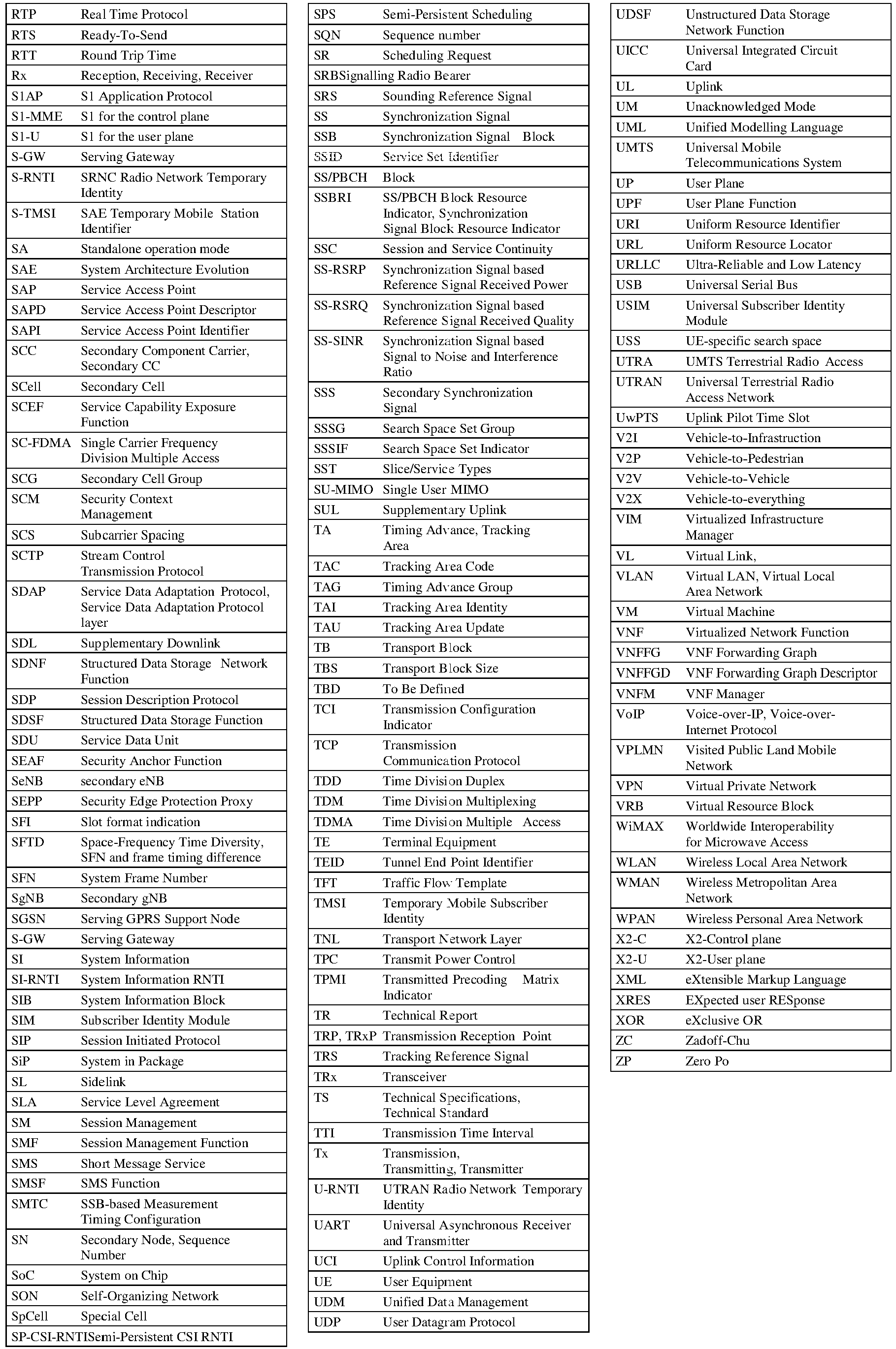

## Claims

1. A method comprising:
receiving a service request from a network function, NF, consumer (208) for the 5G system, 5GS, wherein the service request is associated with a performance measurement for a collection service to be delivered by the service producer (202) to the NF consumer (208) related to a connection between a network exposure function (207), NEF, and a session management function (118), SMF; the method further comprising the steps:
receiving raw performance measurements data from the NEF (207); processing the raw performance measurements data to generate standardized performance measurements based on the raw performance measurement data; and
sending a service response based on the standardized performance measurements.

2. The method of claim 1, wherein the service producer (202) is outside the NEF (207) in a separate management system or inside the NEF (207).

3. The method of claim 1, further comprising initiating a cumulative counter for measurements during a collection period.

4. The method of claim 1, wherein the performance measurement is based on a number of SMF-NEF connection creations or SMF-NEF connection releases.

5. The method of claim 1, wherein the performance measurement comprises at least one of a number of SMF-NEF connection creation requests, a number of successful SMF-NEF connection creations, a number of failed SMF-NEF connection creations, a number of SMF-NEF connection release requests, a number of successful SMF-NEF connection releases, or a number of failed SMF-NEF connection releases.

6. The method of claim 1, wherein the performance measurement is based on a number of service-specific parameters creations, a number of service-specific parameters updates, or a number of service-specific parameters deletions.

7. The method of claim 1, wherein the performance measurement comprises at least one of at least one of a number of service-specific parameters creation requests, a number of successful service-specific parameters creations, a number of failed service-specific parameters creations, a number of service-specific parameters update requests, a number of successful service-specific parameters updates, a number of failed service-specific parameters updates, a number of service-specific parameters deletion requests, a number of successful service-specific parameters deletions, or a number of failed service-specific parameters deletions.

8. The method of claim 1, wherein the performance measurement is based on a number of background data transfer policy negotiation creations or a number of background data transfer policy negotiation updates.

9. The method of claim 1, wherein the performance measurement comprises at least one of at least one of a number of background data transfer policy negotiation creation requests, a number of successful background data transfer policy negotiation creations, a number of failed background data transfer policy negotiation creations, a number of background data transfer policy negotiation update requests, a number of successful background data transfer policy negotiation updates, or a number of failed background data transfer policy negotiation updates.

10. An apparatus comprising means for performing any of the methods of claims 1-9.

11. A network node comprising a communication interface and processing circuitry connected thereto and configured to perform any of the methods of claims 1-9.

## Patentansprüche

1. Verfahren, das Folgendes umfasst:
Empfangen einer Dienstanforderung von einem Netzwerkfunktion (NF)-Verbraucher (208) für das 5G-System (5GS), wobei die Dienstanforderung mit einer Leistungsmessung für einen Erfassungsdienst verbunden ist, der durch den Dienstanbieter (202) an den NF-Verbraucher (208) in Bezug auf eine Verbindung zwischen einer Netzwerk-Expositionsfunktion (NEF) (207) und einer Sitzungsverwaltungsfunktion (SMF) (118) zu liefern ist; wobei das Verfahren ferner die folgenden Schritte umfasst:
Empfangen von Rohleistungsmessdaten von der NEF (207);
Verarbeiten der Rohleistungsmessdaten, um standardisierte Leistungsmessungen basierend auf den Rohleistungsmessdaten zu erzeugen; und
Senden einer Dienstantwort basierend auf den standardisierten Leistungsmessungen.

2. Verfahren nach Anspruch 1, wobei sich der Dienstanbieter (202) außerhalb der NEF (207) in einem separaten Verwaltungssystem oder innerhalb der NEF (207) befindet.

3. Verfahren nach Anspruch 1, das ferner das Initiieren eines kumulativen Zählers für Messungen während einer Sammelperiode umfasst.

4. Verfahren nach Anspruch 1, wobei die Leistungsmessung auf einer Anzahl von SMF-NEF-Verbindungserzeugungen oder SMF-NEF-Verbindungsfreigaben basiert.

5. Verfahren nach Anspruch 1, wobei die Leistungsmessung eine Anzahl von SMF-NEF-Verbindungserzeugungsanforderungen und/oder eine Anzahl erfolgreicher SMF-NEF-Verbindungserzeugungen und/oder eine Anzahl fehlgeschlagener SMF-NEF-Verbindungserzeugungen und/oder eine Anzahl von SMF-NEF-Verbindungsfreigabeanforderungen und/oder eine Anzahl erfolgreicher SMF-NEF-Verbindungsfreigaben und/oder eine Anzahl fehlgeschlagener SMF-NEF-Verbindungsfreigaben umfasst.

6. Verfahren nach Anspruch 1, wobei die Leistungsmessung auf einer Anzahl von dienstspezifischen Parametererzeugungen, einer Anzahl von dienstspezifischen Parameteraktualisierungen oder einer Anzahl von dienstspezifischen Parameterlöschungen basiert.

7. Verfahren nach Anspruch 1, wobei die Leistungsmessung mindestens eines von einer Anzahl von dienstspezifischen Parametererzeugungsanforderungen, einer Anzahl von erfolgreichen dienstspezifischen Parametererzeugungen, einer Anzahl von fehlgeschlagenen dienstspezifischen Parametererzeugungen, einer Anzahl von dienstspezifischen Parameteraktualisierungsanforderungen, einer Anzahl von erfolgreichen dienstspezifischen Parameteraktualisierungen, einer Anzahl von fehlgeschlagenen dienstspezifischen Parameteraktualisierungen, einer Anzahl von dienstspezifischen Parameterlöschungsanforderungen, einer Anzahl von erfolgreichen, dienstspezifischen Parameteraktualisierungen umfasst, oder eine Reihe fehlgeschlagener dienstspezifischer Parameter, die gelöscht werden.

8. Verfahren nach Anspruch 1, wobei die Leistungsmessung auf einer Anzahl von Hintergrunddatenübertragungsrichtlinien-Verhandlungserzeugungen oder einer Anzahl von Hintergrunddatenübertragungsrichtlinien-Verhandlungsaktualisierungen basiert.

9. Verfahren nach Anspruch 1, wobei die Leistungsmessung mindestens eines von einer Anzahl von Hintergrunddatenübertragungsrichtlinien-Verhandlungserzeugungsanforderungen, einer Anzahl von erfolgreichen Hintergrunddatentransferrichtlinien-Verhandlungserzeugungen, einer Anzahl von fehlgeschlagenen Hintergrunddatenübertragungsrichtlinien-Verhandlungserzeugungen, einer Anzahl von Hintergrunddatenübertragungsrichtlinien-Verhandlungsaktualisierungen, einer Anzahl von erfolgreichen Hintergrunddatenübertragungsrichtlinien-Verhandlungsaktualisierungen oder einer Anzahl von fehlgeschlagenen Hintergrunddatenübertragungsrichtlinien-Verhandlungsaktualisierungen umfasst.

10. Vorrichtung, die Mittel zum Durchführen eines der Verfahren nach den Ansprüchen 1-9 umfasst.

11. Netzwerkknoten, der eine Kommunikationsschnittstelle und eine damit verbundene Verarbeitungsschaltung umfasst und so ausgebildet ist, dass er eines der Verfahren der Ansprüche 1-9 durchführt.

## Revendications

1. Procédé comprenant l'étape suivante :
recevoir une demande de service d'un client de fonction réseau, NF, (208) pour le système 5G, 5GS, la demande de service étant associée à une mesure de performance pour un service de collecte à délivrer par le producteur de service (202) au consommateur NF (208) en relation avec une connexion entre une fonction d'exposition réseau (207), NEF, et une fonction de gestion de session (118), SMF ; le procédé comprenant en outre les étapes suivantes :
recevoir des données de mesures de performance brutes de la NEF (207) ;
traiter les données de mesures de performance brutes pour générer des mesures de performance normalisées basées sur les données de mesure de performance brutes ; et
envoyer une réponse de service basée sur les mesures de performance normalisées.

2. Procédé selon la revendication 1, dans lequel le producteur de services (202) est à l'extérieur de la NEF (207) dans un système de gestion séparé ou à l'intérieur de la NEF (207).

3. Procédé selon la revendication 1, comprenant en outre le lancement d'un compteur cumulatif pour des mesures pendant une période de collecte.

4. Procédé selon la revendication 1, dans lequel la mesure de performance est basée sur un nombre de créations de connexion SMF-NEF ou de libérations de connexion SMF-NEF.

5. Procédé selon la revendication 1, dans lequel la mesure de performance comprend au moins l'une d'un certain nombre de demandes de création de connexion SMF-NEF, d'un certain nombre de créations de connexion SMF-NEF réussies, d'un certain nombre de créations de connexion SMF-NEF qui ont échoué, d'un certain nombre de demandes de libération de connexion SMF-NEF, d'un certain nombre de libérations de connexion SMF-NEF réussies, ou d'un certain nombre de libérations de connexions SMF-NEF qui ont échoué.

6. Procédé selon la revendication 1, dans lequel la mesure de performance est basée sur un certain nombre de créations de paramètres spécifiques au service, un certain nombre de mises à jour de paramètres spécifiques au service, ou un certain nombre de suppressions de paramètres spécifiques au service.

7. Procédé selon la revendication 1, dans lequel la mesure de performance comprend au moins l'une d'au moins une parmi un certain nombre de demandes de création de paramètres spécifiques au service, un certain nombre de créations réussies de paramètres spécifiques au service, un certain nombre de demandes de mise à jour de paramètres spécifiques au service, un certain nombre de mises à jour réussies de paramètres spécifiques au service, un certain nombre de mises à jour qui ont échoué de paramètres spécifiques au service, un certain nombre de demandes de suppression de paramètres spécifiques au service, un certain nombre de suppressions réussies de paramètres spécifiques au services, ou un certain nombre de suppressions de paramètres spécifiques au service qui ont échoué.

8. Procédé selon la revendication 1, dans lequel la mesure de performance est basée sur un certain nombre de créations de négociation de politique de transfert de données en arrière-plan ou un certain nombre de mises à jour de négociation de politique de transfert de données en arrière-plan.

9. Procédé selon la revendication 1, dans lequel la mesure de performance comprend au moins l'une d'au moins une d'un certain nombre de demandes de création de négociation de politique de transfert de données en arrière-plan, d'un certain nombre de créations de négociation de politique de transfert de données en arrière-plan réussies, d'un certain nombre de créations de négociation de politique de transfert de données en arrière-plan ayant échoué, d'un certain nombre de demandes de mise à jour de négociation de politique de transfert de données en arrière-plan, d'un certain nombre de mises à jour de négociation de politique de transfert de données en arrière-plan réussies ou d'un certain nombre de mises à jour de négociation de politique de transfert de données en arrière-plan ayant échoué.

10. Appareil, comprenant des moyens pour exécuter l'un quelconque des procédés des revendications 1 à 9.

11. Nœud de réseau comprenant une interface de communication et des circuits de traitement connectés à celle-ci, et configurés pour exécuter l'un quelconque des procédés des revendications 1 à 9.
